Europäisches Patentamt

European Patent Office

Office européen des brevets

(11) Veröffentlichungsnummer: **0 471 107 A1**

# EUROPÄISCHE PATENTANMELDUNG

(21) Anmeldenummer: **90115700.8**

(51) Int. Cl.5: **H02M 7/525**, H02J 3/26

(22) Anmeldetag: **16.08.90**

(43) Veröffentlichungstag der Anmeldung:
**19.02.92 Patentblatt 92/08**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Braun, Rüdiger, Dipl.-Ing. (FH)**
**Egidienstrasse 35**
**W-8520 Erlangen(DE)**
Erfinder: **Forstbauer, Wilhelm, Dr.-Ing.**
**Ebrardstrasse 122**
**W-8520 Erlangen(DE)**

(54) **Verfahren und Vorrichtung zur Symmetrierung eines Drehstromsystems.**

(57) Die Erfindung bezieht sich auf ein Verfahren und eine Vorrichtung zur Symmetrierung eines Drehstromsystems (18), das mittels eines Wechselrichters (12) aus einer Gleichspannungsquelle (10) erzeugt wird, wobei der Ausgang (R',S',T') dieses Wechselrichters (12) mit einem Filter (14) mit nachgeschaltetem Sternpunktbildner (16) versehen ist. Erfindungsgemäß werden aus gemessenen Leiterspannungen ($u_{RL}$,$u_{SL}$,$u_{TL}$) Beträge ($\hat{u}_R^*$, $\hat{u}_S^*$, $\hat{u}_T^*$) gebildet, die als Istwerte jeweils einer Regeleinrichtung (34,42;36,44; 38,46) zugeführt werden, die jeweils eine Leiterspannungs-Stellgröße ($U_{StR}$, $U_{StS}$,$U_{StT}$) erzeugt, wobei mittels einer Transformationseinrichtung (54) diese Leiterspannungs-Stellgrößen ($U_{StR}$,$U_{StS}$,$U_{StT}$) in Sternspannungs-Stellgrößen ($U_{Str}$,$U_{Sts}$,$U_{Stt}$) gewandelt und winkelsymmetrischen Steuersätzen (96, 98, 100) zugeführt werden. Somit kann mit dieser einfachen Einphasen-Betragsregelung ein Drehstromsystem (18) bei Schieflast symmetrisch bleiben, indem unter Beibehaltung der Winkelsymmetrie die Beträge des Wechselrichters (12) unsymmetrisch gesteuert werden.

FIG 1

Die Erfindung bezieht sich auf ein Verfahren und eine Vorrichtung zur Symmetrierung eines Drehstromsystems, das mittels eines Wechselrichters aus einer Gleichspannungsquelle erzeugt wird, wobei der Ausgang dieses Wechselrichters mit einem Filter mit nachgeschaltetem Sternpunktbildner versehen ist.

Aus der europäischen Patentschrift 0 208 088 ist eine Vorrichtung zur Erzeugung eines symmetrischen dreiphasigen Ausgangsspannungssystems mit belastbaren Null-Leiter bekannt. Diese Vorrichtung enthält eine Wechselrichteranordnung und eine Spannungstransformationseinrichtung, insbesondere einen potentialfreien Drehspannungstransformator mit sekundärseitiger Sternpunktschaltung, die primärseitig an die Wechselrichteranordnung angeschlossen ist. Außerdem ist ein Filter mit der Spannungstransformationseinrichtung in Reihe geschaltet. Ein Sollwertgeber gibt drei winkelsymmetrische Sollwerte vor. Jeweils einem Sollwert und einem Wechselstromausgang der Wechselrichteranordnung ist eine Regeleinrichtung zugeordnet, der ein Steuersatz nachgeschaltet ist. Als Wechselrichteranordnung ist ein pulsbreitenmodulierter, dreiphasiger Brückenumrichter vorgesehen. Ein die Struktur der Spannungstransformationseinrichtung abbildendes Entkopplungsnetzwerk bildet aus Momentanwerten, die den Sternspannungen am Ausgang der Reihenschaltung entsprechen, transformierte Momentanwerte, die einem Spannungssystem am Eingang der Spannungstransformationseinrichtung entsprechen. Die Regeleinrichtung und das Entkopplungsnetzwerk sind derart zusammengeschaltet, daß sie aus den Sollwerten und aus Meßwerten für die Sternspannungen des Ausgangsspannungssystems Steuerspannungen für die auf jeweils einen Ausgang der Wechselrichteranordnung arbeitenden Zweigpaare liefern, wobei mit den Steuerspannungen die Abweichung der transformierten Meßwerte von den Sollwerten ausregelbar ist. Mittels dieser Vorrichtung können an den Klemmen des Ausgangsspannungssystems auftretende momentane Unsymmetrien rasch ausgeregelt werden, indem jedes Paar der Wechselrichteranordnung von einem eigenen Steuersatz in der Art eines unsymmetrischen Spannungssystems mit einer Steuerspannung angesteuert wird, die rasch verändert wird. Das Entkopplungsnetzwerk gestattet es, die sekundärseitig mit dem belastbaren Sternpunkt verknüpften Meßgrößen in Ersatz-Meßgrößen eines nullleiterfreien Systems umzurechnen. Dadurch stehen Ersatz-Istwerte eines fiktiven Spannungssystems am Eingang der Spannungstransformationseinrichtung für die Regelung bereit. Die gebildeten Steuerspannungen sind unsymmetrisch.

Der Erfindung liegt nun die Aufgabe zugrunde, ein Verfahren und eine Vorrichtung zur Symmetrierung eines Drehstromsystems anzugeben, wobei auf eine Umrechnung von sekundärseitig mit dem belastbaren Sternpunkt verknüpften Meßgrößen in Ersatz-Meßgrößen eines nullleiterfreien Systems verzichtet wird.

Diese Aufgabe wird erfindungsgemäß mit den im Anspruch 1 angegebenen Verfahrensschritten gelöst. Die gemessenen Leiterspannungen (verkettete Spannung) werden jeweils in einen Drehvektor gewandelt, deren Beträge anschließend ermittelt werden. Jeder Betrags-Istwert wird mit einem vorbestimmten Betrags-Sollwert verglichen. Die entstehenden Abweichungen werden jeweils von einer eigenen Regeleinrichtung ausgeregelt. Diese gebildeten Leiterspannungs-Stellgrößen bilden die Beträge eines Spannungssystems und werden jeweils in Sternspannungs-Stellgrößen transformiert, die dann dem Wechselrichter zugeführt werden. Mit dieser Einphasen-Betragsregelung kann ein Drehstromsystem auch bei Einphasenbelastung symmetrisch bleiben, indem unter Beibehaltung der Winkelsymmetrie für das fiktive Sternsystem (Sternspannungs-Stellgrößen) die Beträge des Wechselrichters unsymmetrisch gesteuert werden.

Der Aufbau einer erfindungsgemäßen Vorrichtung zur Durchführung des Verfahrens zur Symmetrierung eines Drehstromsystems ist dem Anspruch 2 zu entnehmen. Mittels der Betragseinrichtungen werden aus den gemessenen Leiterspannungen des Drehstromsystems die Beträge ermittelt, die als Istwerte jeder Regeleinrichtung zugeführt werden. Die erzeugten Leiterspannungs-Stellgrößen werden mit Hilfe einer Transformationseinrichtung in Sternspannungs-Stellgrößen gewandelt, die jeweils mittels eines Steuersatzes den Wechselrichter steuern. Die Ausführungsformen der Elemente der Betragseinrichtung - Vektoridentifizierer, Vektoranalysator - sind aus dem Aufsatz "Koordinatentransformationen für Mehrgrößen-Regelsysteme zur Kompensation und Symmetrierung von Drehstromnetzen", abgedruckt in Siemens Forsch.- u. Entwickl.-Ber., Bd. 6 (1977) Nr. 1, Seiten 29 bis 38, bekannt.

Zur weiteren Erläuterung der Erfindung wird auf die Zeichnung Bezug genommen, in der ein Ausführungsbeispiel einer Vorrichtung zur Durchführung des erfindungsgemäßen Verfahrens schematisch dargestellt ist.

Figur 1   zeigt den Leistungsteil der Vorrichtung mit einer Ausführungsform seines Regelteils, in

Figur 2   ist eine Ausführungsform eines Vektoridentifizierers der Betragseinrichtung des Regelteils nach Figur 1 dargestellt, in

Figur 3   ist eine Ausführungsform eines Vektoranalysator der Betragseinrichtung des Regelteils nach Figur 1 veranschaulicht,

Figur 4   zeigt eine Ausführungsform einer Transformationseinrichtung des Regelteils nach Figur 1, in

Figur 5   ist das Spannungssystem des erzeugten Drehstromsystems mit einer Schieflast und ohne Symmetrierung dargestellt und die

Figur 6       veranschaulicht das Spannungssystem des erzeugten Drehstromsystems mit einer Schieflast und Symmetrierung.

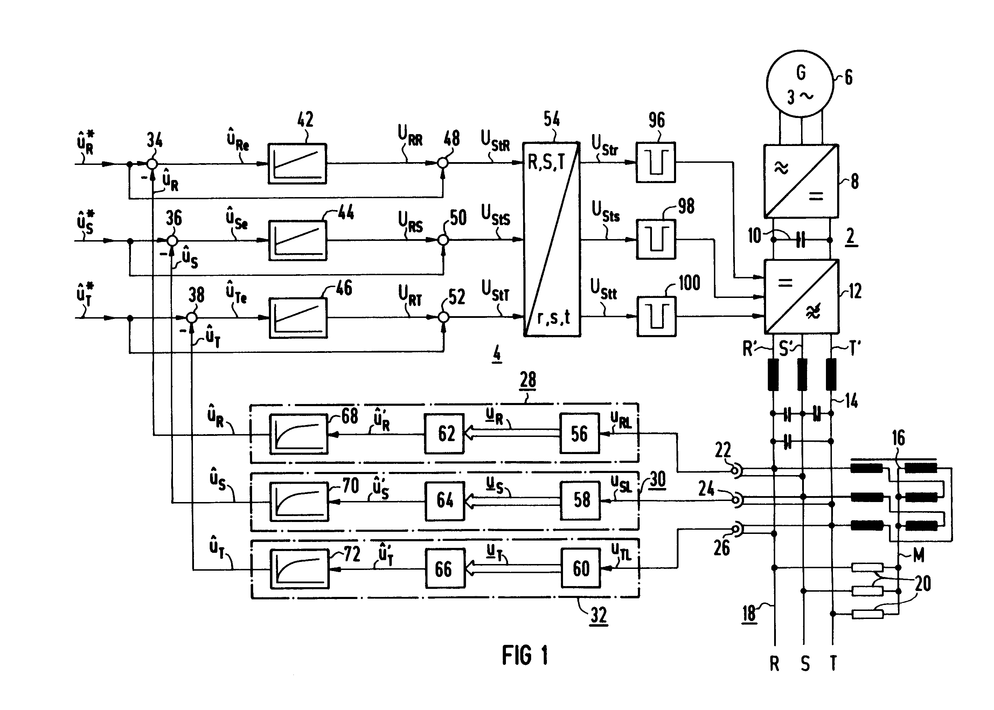

Die Figur 1 zeigt eine Vorrichtung zur Erzeugung eines Drehstromsystems mit den Ausgängen R, S und T, bestehend aus einem Leistungsteil 2 und einem Regelteil 4.

Der Leistungsteil 2 besteht aus einem Generator 6, beispielsweise einem rotierenden gleichrichtererregten Synchrongenerator, dem ein Gleichrichter 8 mit nachgeschalteter Gleichspannungsquelle 10, beispielsweise ein Spannungszwischenkreis, nachgeschaltet ist. Als Gleichrichter 8 kann auch ein Wechselrichter bzw. Umkehrstromrichter vorgesehen sein. Am Spannungszwischenkreis 10 ist eingangsseitig ein Wechselrichter 12 angeschlossen, der ausgangsseitig mit einem Filter 14 versehen ist. Dem Filter 14 ist ein Sternpunktbildner 16 nachgeschaltet, der einen Sternpunkt M bildet. Dadurch ist eine Einphasenbelastung möglich. Zwischen den einzelnen Drehstromausgängen R, S und T des gebildeten Drehstromsystems 18 und dem Sternpunkt M ist jeweils eine Last 20 angeschlossen. Der Generator 6 kann beispielsweise von einem Schubtriebwerk angetrieben werden, womit das erzeugte Drehstromsystem 18 ein Flugzeugbordnetz von beispielsweise 3x115 V, 400 Hz ist. Der Generator 6 kann aber auch von Windkraft angetrieben werden oder der Spannungszwischenkreis 10 kann eine Brennstoffzelle sein, so daß das Drehstromsystem 18 ein Inselnetz darstellt. Anstelle des Generators 6 kann auch ein Versorgungsnetz vorgesehen sein, so daß das erzeugte Drehstromsystem 18 (unterbrechungsfreie Stromversorgung) ein gesichertes Drehstromsystem ist.

Der Regelteil 4 enthält eingangsseitig drei Wandler 22, 24 und 26 mit denen die drei Ausgangsspannungen des Filters 14 als Leiterspannung $u_{RL}$, $u_{SL}$ und $u_{TL}$ erfaßt werden. Diese gemessenen Leiterspannungen $u_{RL}$, $u_{SL}$ und $u_{TL}$ werden jeweils einer Betragseinrichtung 28, 30 und 32 zugeführt, an deren Ausgänge der Betrag $\hat{u}_R$, $\hat{u}_S$ und $\hat{u}_T$ der Leiterspannungen $u_{RL}$, $u_{SL}$ und $u_{TL}$ anstehen. Der Betrag $\hat{u}_R$ bzw. $\hat{u}_S$ bzw. $\hat{u}_T$ wird als Istwert einem Minus-Eingang eines Vergleichers 34 bzw. 36 bzw. 38 zugeführt. Am Plus-Eingang dieses Vergleichers 34 bzw. 36 bzw. 38 steht ein Sollwert $\hat{u}_R^*$ bzw. $\hat{u}_S^*$ bzw. $\hat{u}_T^*$ an. Der in Abhängigkeit des Betrag-Istwertes $\hat{u}_R$ bzw. $\hat{u}_S$ bzw. $\hat{u}_T$ und des Betrag-Sollwertes $\hat{u}_R^*$ bzw. $\hat{u}_S^*$ bzw. $\hat{u}_T^*$ erzeugte Regeldifferenzwert $\hat{u}_{Re}$ bzw. $\hat{u}_{Se}$ bzw. $\hat{u}_{Te}$ wird einem Betragsregler 42 bzw. 44 bzw. 46 zugeführt, dem ein Addierer 48 bzw. 50 bzw. 52 nachgeschaltet ist. Der vom Regler 42 bzw. 44 bzw. 46 erzeugte Wert $U_{RR}$ bzw. $U_{RS}$ bzw. $U_{RT}$ wird dem einen Eingang des Addierers 48 bzw. 50 bzw. 52 zugeführt, an dessem zweiten Eingang der Betrag-Sollwert $\hat{u}_R^*$ bzw. $\hat{u}_S^*$ bzw. $\hat{u}_T^*$ ansteht. Durch diese Aufschaltung des Betrag-Sollwertes $\hat{u}_R^*$ bzw. $\hat{u}_S^*$ bzw. $\hat{u}_T^*$ auf den vom Regler 42 bzw. 44 bzw. 46 erzeugten Wert $U_{RR}$ bzw. $U_{RS}$ bzw. $U_{RT}$ - eine sogenannte Vorsteuerung - erhält man eine Stellgröße $U_{StR}$ bzw. $U_{StS}$ bzw. $U_{StT}$. Durch die Vorsteuerung wird die Regelung schneller, da nur kleine Soll-Ist-Differenzen auszuregeln sind. Für diese Mittelwert-Regelung kann als Betragsregler 42 bzw. 44 bzw. 46 ein PI-Regler verwendet werden, der die Soll-Ist-Differenz zu Null regelt.

Da die Betragsregler 42, 44 und 46 Dreiecksgrößen regeln, der Wechselrichter 12 aber nur Sterngrößen stellen kann, müssen die Leiterspannungs-Stellgrößen $U_{RtR}$, $U_{StS}$ und $U_{StT}$ in Sternspannungs-Stellgrößen $U_{Str}$, $U_{Sts}$ und $U_{Stt}$ transformiert werden. Dies geschieht mit einer Transformationseinrichtung 54, die eingangsseitig mit den Ausgängen der Addierer 48, 50 und 52 und ausgangsseitig jeweils mittels eines Steuersatzes 96,98 und 100 mit einem Zweigpaar des Wechselrichters 12 verbunden sind. Die drei Steuersätze 96,98,100 werden winkelsymmetrisch ($120^{\circ}$) gesteuert. Durch die fest vorgegebene Winkelsymmetrie sind Modulationsverfahren für die Steuersätze, die eine 3. Oberschwingung erzeugen und damit zu einer besseren Ausnützung des Wechselsrichters führen (Supersinus-Dreieck-Modulation), vorteilhaft einzusetzen. Eine phasenmäßige Darstellung ist der Figur 1 der europäischen Patentschrift 0 208 088 zu entnehmen.

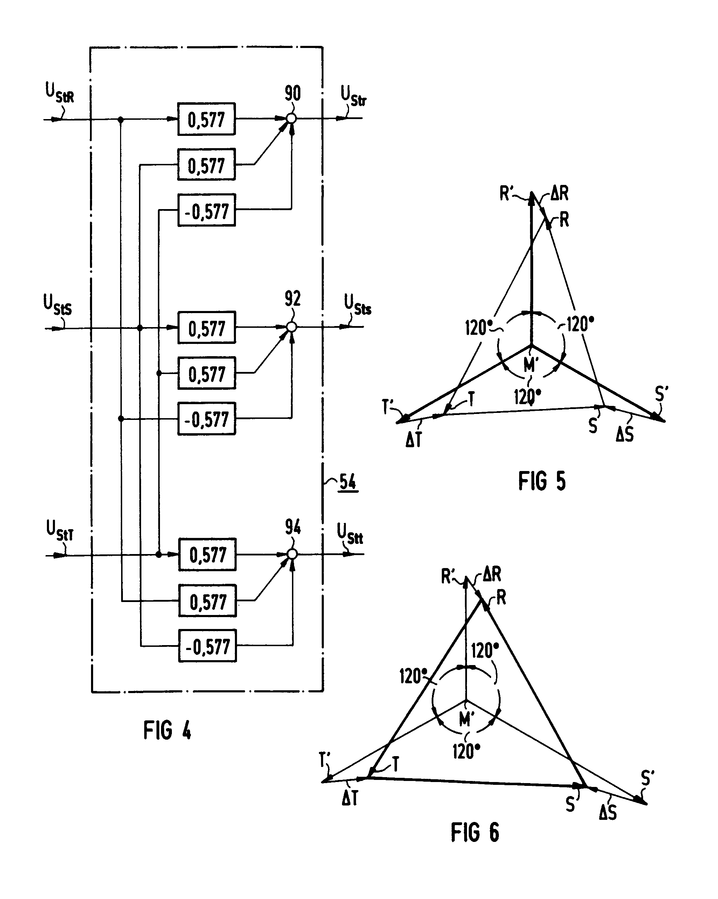

Eine Ausführungsform der Transformationseinrichtung 54 ist in Figur 4 näher dargestellt. Die Sternspannungs-Stellgröße $U_{Str}$ bzw. $U_{Sts}$ bzw. $U_{Stt}$ wird aus den drei Leiterspannungs-Stellgrößen $U_{StR}$, $U_{StS}$ und $U_{StT}$ gemäß der Gleichung

$$U_{Str} = \frac{1}{\sqrt{3}} U_{StR} + \frac{1}{\sqrt{3}} U_{StS} - \frac{1}{\sqrt{3}} U_{StT}$$

$$\text{bzw.} \quad U_{Sts} = \frac{1}{\sqrt{3}} U_{StS} + \frac{1}{\sqrt{3}} U_{StT} - \frac{1}{\sqrt{3}} U_{StR}$$

$$\text{bzw.} \quad U_{Stt} = \frac{1}{\sqrt{3}} U_{StT} + \frac{1}{\sqrt{3}} U_{StR} - \frac{1}{\sqrt{3}} U_{StS}$$

erzeugt. Diese transformierten Sternspannungs-Stellgrößen $U_{Str}$, $U_{Sts}$ und $U_{Stt}$ bewirken am Eingang des Filters 14 ein winkelsymmetrisches Spannungssystem R', S' und T' mit ungleichen Beträgen, wodurch am Ausgang des Filters 14 sich ein symmetrisches Spannungssystem R, S und T bei Schieflast (Einphasenbelastung) einstellt. Ein Zeigerdiagramm dieser Spannungssysteme R', S' und T' und R, S und T sind in der Figur 5 (keine Symmetrierung) und in der Figur 6 (Symmetrierung) näher dargestellt.

Die Betragseinrichtung 28 bzw. 30 bzw. 32 des Regelteils 4 weist eingangsseitig einen Vektoridentifizierer 56 bzw. 58 bzw. 60 mit nachgeschaltetem Vektoranalysator 62 bzw. 64 bzw. 66 und ausgangsseitig eine Istwertglättung 68 bzw. 70 bzw. 72 auf. Der Vektoridentifizierer 56 bzw. 58 bzw. 60 hat die Aufgabe, aus einer gegebenen Schwingung, z.B. dargestellt durch

$$u(t) = \hat{u} \cdot \cos(\omega t + \phi)$$
$$u(t) = \tfrac{1}{2}(\hat{u} \cdot e^{j(\omega t + \phi)} + \hat{u} \cdot e^{-j(\omega t + \phi)}),$$

einen Drehvektor

$$\underline{u}(t) = \hat{u} \cdot e^{j(\omega t + \phi)} = \hat{u}(\cos(\omega t + \phi) + j\sin(\omega t + \phi))$$

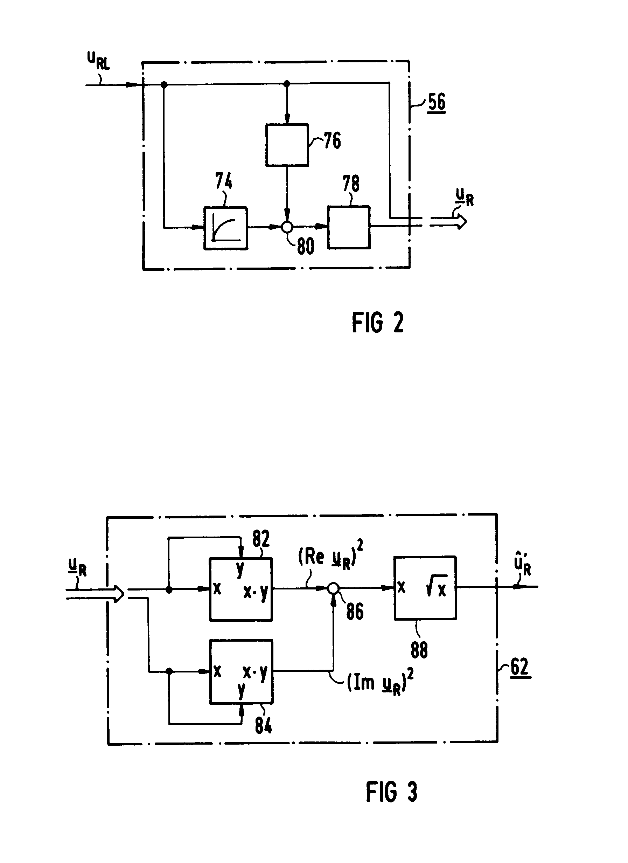

zu bestimmen. Auch anders ausgedrückt lautet die Aufgabe des Vektoridentifizierers 56 bzw. 58 bzw. 60: Zu der gegebenen Cosinus-Schwingung ist die zugehörige Sinus-Schwingung zu ermitteln. Ein Ausführungsbeispiel ist in der Figur 2 näher dargestellt. Dieser ermittelte Drehvektor $\underline{u}_R$ bzw. $\underline{u}_S$ bzw. $\underline{u}_T$ wird dem Vektoranalysator 62 bzw. 64 bzw. 66 zugeführt. Ein Ausführungsbeispiel des Vektoranalysators 62 bzw. 64 bzw. 66 ist in Figur 3 näher dargestellt. Dieser Vektoranalysator 62 bzw. 64 bzw. 66 ermittelt den Betrag des Drehvektors $\underline{u}_R$ bzw. $\underline{u}_S$ bzw. $\underline{u}_T$ gemäß folgender Gleichung:

$$\hat{u} = |\underline{u}| = \sqrt{(\mathrm{Re}\ \underline{u})^2 + (\mathrm{Im}\ \underline{u})^2}\ .$$

Dieser ermittelte Betrag $\hat{u}'_R$ bzw. $\hat{u}'_S$ bzw. $\hat{u}'_T$ wird noch mittels der Istwertglättung 68 bzw. 70 bzw. 72 geglättet, da die Spannungen $u_{RL}$ bzw. $u_{SL}$ bzw. $u_{TL}$ am Ausgang des Filters 14 oberschwingungsbehaftet sind. Am Ausgang der Betragseinrichtung 28 bzw. 30 bzw. 32 steht ein Betrag $\hat{u}_R$ bzw. $\hat{u}_S$ bzw. $\hat{u}_T$ zur Verfügung, der als Istwert dem Vergleicher 34 bzw. 36 bzw. 38 zugeführt wird.

In der Figur 2 ist ein Ausführungsbeispiel für die Vektoridentifizierer 56, 58 und 60 näher dargestellt. Wegen der Übersichtlichkeit ist hier nur der Vektoridentifizierer 56 als repräsentativer Vektoridentifizierer dargestellt. Dieser Vektoridentifizierer 56, der zu einer gegebenen Cosinus-Schwingung eine zugehörige Sinus-Schwingung ermitteln soll, kann im einfachsten Fall aus einem Laufzeitglied bestehen. Im Hinblick auf kurze Regelzeiten und eine einfache Realisierung besteht der Vektoridentifizierer 56 aus einem Verzögerungsglied 74, zwei Faktoren 76 und 78 und einem Addierer 80. Der Eingang des Vektoridentifizierer 56 ist einerseits direkt mit dem Ausgang des Vektoridentifizierers 56 und andererseits einerseits mit dem Verzögerungsglied 74 und andererseits mit dem Faktor 76 verbunden. Die Ausgänge des Verzögerungsgliedes 74 und des Faktors 76 sind mittels des Addierers 80 miteinander verknüpft, wobei der Ausgang des Addierers 80 über den Faktor 78 mit dem Ausgang des Vektoridentifizierers 56 verknüpft ist. Am Ausgang steht ein Drehvektor $\underline{u}_R$ an. Zur Dimensionierung des Vektoridentifizierers 56 wird auf den Aufsatz "Koordinatentransformationen für Mehrgrößen-Regelsystemezur Kompensation und Symmetrierung von Drehstromnetzen", abgedruckt in Siemens Forsch.- u. Entwickl.-Ber., Bd. 6 (1977), Nr. 1, Seiten 29 bis 38, hingewiesen.

In Figur 3 ist repräsentativ für die drei Vektoranalysatoren 62, 64 und 66 der Vektoranalysator 62 näher dargestellt. Der Vektoranalysator 62 besteht aus zwei Quadrierern bzw. Multiplizierer 82 und 84, einem Addierer 86 und einem Radizierer 88. Auf den Radizierer 88 kann verzichtet werden, wenn die Sollwerte konstant sind. Der Realteil $\mathrm{Re}\ \underline{u}_R$ und der Imaginärteil $\mathrm{Im}\ \underline{u}_R$ des Drehvektors $\underline{u}_R$ wird jeweils den Eingängen x und y der Multiplizerer 82 und 84 zugeführt. An ihren Ausgängen steht jeweils das Quadrat des Realteils $\mathrm{Re}\ \underline{u}_R$ und des Imaginärteils $\mathrm{Im}\ \underline{u}_R$ an. Diese Quadrate $(\mathrm{Re}\ \underline{u}_R)^2$ und $(\mathrm{Im}\ \underline{u}_R)^2$ werden mittels des Addierers 86 addiert und die Summe dem nachgeschalteten Radizierer 88 zugeführt. Am Ausgang des Radizierers 88 steht dann der Betrag $\hat{u}'_R$ des Drehvektors $\underline{u}_R$ an.

In Figur 4 ist die Transformationseinrichtung 54 nach Figur 1 näher dargestellt. Wie bereits erwähnt, wird die Sternspannungs-Stellgröße $U_{Str}$ bzw. $U_{Sts}$ bzw. $U_{Stt}$ aus den Leiterspannungs-Stellgrößen $U_{StR}$, $U_{StS}$ und $U_{StT}$ nach folgenden Gleichungen

$$U_{Str} = \frac{1}{\sqrt{3}}\, U_{StR} + \frac{1}{\sqrt{3}}\, U_{StS} - \frac{1}{\sqrt{3}}\, U_{StT}$$

$$\text{bzw.} \qquad U_{Sts} = \frac{1}{\sqrt{3}}\, U_{StS} + \frac{1}{\sqrt{3}}\, U_{StT} - \frac{1}{\sqrt{3}}\, U_{StR}$$

$$\text{bzw.} \qquad U_{Stt} = \frac{1}{\sqrt{3}}\, U_{StT} + \frac{1}{\sqrt{3}}\, U_{StR} - \frac{1}{\sqrt{3}}\, U_{StS}$$

bestimmt. Der Faktor $1/\sqrt{3}$ ist gleich dem Faktor 0,577. Somit besteht die Transformationseinrichtung 54 aus drei Addierern 90, 92 und 94, an deren Eingängen die gewichteten Leiterspannungs-Stellgrößen $U_{StR}$, $U_{StS}$ und $U_{StT}$ anstehen. Am Ausgang des Addierers 90 bzw. 92 bzw. 94 steht dann die Sternspannungs-Stellgröße $U_{Str}$ bzw. $U_{Sts}$ bzw. $U_{Stt}$ an.

In Figur 5 sind das Spannungssystem R', S' und T', das am Eingang des Filters 14 vorhanden ist und das Spannungssystem R, S und T, das sich bei einer Schieflast bzw. unsymmetrischer Belastung am Ausgang des Filters 14 einstellt. Bei diesem Zeigerbild hat der Wechselrichter 12 eine symmetrische Steuerung für die Beträge bei winkelsymmetrischer Vorgabe. Aufgrund der unterschiedlichen Spannungsab-fälle $\Delta R$, $\Delta S$ und $\Delta T$ - unsymmetrische Belastung - stellt sich am Ausgang des Filters 14 das unsymmetrische Spannungssystem R, S und T ein. Dieses Spannungssystem R, S und T kann symmetriert werden, wenn die Beträge im winkelsymmetrischen System R', S' und T' einzeln und verschieden voneinander so eingestellt werden, daß sich am Ausgang des Filters 14 ein symmetrisches Spannungssystem R, S und T einstellt, d.h., die Beträge des symmetrischen Spannungssystems R, S und T gleich den Betrag-Sollwerten $\hat{u}_R^*$, $\hat{u}_S^*$ und $\hat{u}_T^*$ sind. Im Zeigerdiagramm der Figur 6 ist zu erkennen, daß die einzelnen Beträge des winkelsymmetrischen Spannungssystems R', S' und T' sehr verschieden voneinander sind und daß sich am Ausgang des Filters 14 einstellende Spannungssystem R, S und T symmetrisch ist, obwohl eine Schieflast vorhanden ist.

Somit kann man mit einer Einphasen-Betragsregelung für jeden Drehstromausgang des Wechselrichters 12 mit einfachen Mitteln einen Istwert für die Betragsregelung erzeugen, wodurch die Beträge einzeln und unterschiedlich geregelt werden können, so daß trotz Schieflast das erzeugte Drehstromsystem 18 symmetrisch bleibt.

**Patentansprüche**

1. Verfahren zur Symmetrierung eines Drehstromsystems (18), das mittels eines Wechselrichters (12) aus einer Gleichspannungsquelle (10) erzeugt wird, wobei der Ausgang (R', S', T') dieses Wechselrichters (12) mit einem Filter (14) mit nachgeschaltetem Sternpunktbildner (16) versehen ist, mit folgenden Verfahrensschritten:

a) Bildung eines Drehvektors ($u_R$, $u_S$, $u_T$) jeweils aus einer gemessenen Leiterspannung ($u_{RL}$, $u_{SL}$, $u_{TL}$) des erzeugten Drehstromsystems (18),

b) Berechnung des Betrages ($\hat{u}_R$, $\hat{u}_S$, $\hat{u}_T$) eines jeden Drehvektors ($u_R$, $u_S$, $u_T$),

c) Regelung dieser ermittelten Beträge ($\hat{u}_R$, $\hat{u}_S$, $\hat{u}_T$) auf jeweils einen vorbestimmten Betrag-Sollwert ($\hat{u}_R^*$, $\hat{u}_S^*$, $\hat{u}_T^*$),

d) Transformation der drei erzeugten Leiterspannungs-Stellgrößen ($U_{StR}$, $U_{StS}$, $U_{StT}$) in drei Sternspannungs-Stellgrößen ($U_{Str}$, $U_{Sts}$, $U_{Stt}$), wobei jede Sternspannungs-Stellgröße ($U_{Str}$, $U_{Sts}$, $U_{Stt}$) aus den Leiterspannungs-Stellgrößen ($U_{StR}$, $U_{StS}$, $U_{StT}$) gemäß folgender Gleichungen

$$U_{Str} = \frac{1}{\sqrt{3}}\, U_{StR} + \frac{1}{\sqrt{3}}\, U_{StS} - \frac{1}{\sqrt{3}}\, U_{StT}$$

$$\text{bzw.} \qquad U_{Sts} = \frac{1}{\sqrt{3}}\, U_{StS} + \frac{1}{\sqrt{3}}\, U_{StT} - \frac{1}{\sqrt{3}}\, U_{StR}$$

$$\text{bzw.} \qquad U_{Stt} = \frac{1}{\sqrt{3}}\, U_{StT} + \frac{1}{\sqrt{3}}\, U_{StR} - \frac{1}{\sqrt{3}}\, U_{StS}$$

hergeleitet wird und

e) Zuführung der drei Sternspannungs-Stellgrößen ($U_{Str}$,$U_{Sts}$,$U_{Stt}$) an drei winkelsymmetrische Steuersätze (96,98,100).

2.  Vorrichtung zur Durchführung des Verfahrens nach Anspruch 1 mit einem Wechselrichter (12), der ausgangsseitig mit einem Filter (14) versehen ist, dem ein Sternpunktbildner (16) nachgeschaltet ist, mit drei Betrags-Sollwerten ($\hat{u}_R^*$ , $\hat{u}_S^*$ , $\hat{u}_T^*$ ) und mit je einem einem Betrags-Sollwert ($\hat{u}_R^*$ , $\hat{u}_S^*$ , $\hat{u}_T^*$ ) und einem Drehstromausgang (R, S, T) der Wechselrichteranordnung (12, 14, 16) zugeordneten Regeleinrichtung (34, 42 bzw. 36, 44 bzw. 38, 46), **dadurch gekennzeichnet,** daß jedem Drehstromausgang (R, S, T) ein Wandler (22, 24, 26) zur Ermittlung einer Leiterspannung ($u_{RL}$, $u_{SL}$, $u_{TL}$) des Drehstromsystems (18) zugeordnet ist, denen jeweils eine Betragseinrichtung (28, 30, 32) nachgeschaltet ist, die ausgangsseitig mit einem Minus-Eingang eines Vergleichers (34, 36, 38) der Regeleinrichtung (34, 42; 36, 44; 38, 46) verknüpft ist, deren Betragsregler (42, 44, 46) ausgangsseitig mit einer Transformationseinrichtung (54) verbunden sind, deren Ausgänge jeweils mit einem Steuersatz (96,98,100), die untereinander Winkelsymmetrie aufweisen, verknüpft sind, und daß jede Betragseinrichtung (28, 30, 32) eingangsseitig einen Vektoridentifizierer (56, 58, 60) mit nachgeschaltetem Vektoranalysator (62, 64, 66) aufweist und ausgangsseitig mit einer Istwertglättung (68, 70, 72) versehen ist, die eingangsseitig mit dem Ausgang des Vektoranalysators (62, 64, 66) verknüpft ist.

3.  Vorrichtung nach Anspruch 2, **dadurch gekennzeichnet,** daß jedem Betragsregler (42, 44, 46) ein Addierer (48, 50, 52) nachgeschaltet ist, deren Ausgänge mit der Transformationseinrichtung (54) verknüpft sind und an dessem einen Einigung der Betrags-Sollwert ($\hat{u}_R^*$ , $\hat{u}_S^*$ , $\hat{u}_T^*$ ) ansteht.

FIG 1

$u_{RL}$

76

74

78

$\underline{u}_R$

80

**FIG 2**

56

$\underline{u}_R$

82

y

x    x·y

$(\text{Re } \underline{u}_R)^2$

x    $\sqrt{x}$

$\hat{u}'_R$

86

88

x    x·y

y

$(\text{Im } \underline{u}_R)^2$

84

62

**FIG 3**

**FIG 4**

**FIG 5**

**FIG 6**

Europäisches
Patentamt

**EUROPÄISCHER
RECHERCHENBERICHT**

Nummer der Anmeldung

**EP 90 11 5700**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 236 071   (SIEMENS)<br>* Zusammenfassung; Seite 9, Zeilen 1-22; Seite 10, Zeilen 22-28; Seite 11, Zeilen 30-35; Figur 2 *<br>– – – | 1-2 | H 02 M 7/525<br>H 02 J 3/26 |
| D,A | EP-A-0 208 088   (SIEMENS)<br>* Zusammenfassung; Anspruch 1; Figur 1 *<br>– – – | 1-2 | |
| D,A | SIEMENS FORSCH. U. ENTWICKL.-BER., Band 6, Nr. 1, 1977, Seiten 29-38, Springer-Verlag, Berlin, DE; W. MEU-SEL et al.: "Coordinate transformations of multi-term regulation systems for the compensation and symmetrization of three-phase supplies"<br>* Figuren 7,15,19 *<br>– – – – – | 1-3 | |
| | | | **RECHERCHIERTE SACHGEBIETE (Int. Cl.5)**<br><br>H 02 M<br>H 02 J |

Der vorliegende Recherchenbericht wurde für alle Patentansprüche erstellt

| Recherchenort | Abschlußdatum der Recherche | Prüfer |
|---|---|---|
| Den Haag | 09 April 91 | GENTILI L. |